# EUROPEAN PATENT SPECIFICATION

(11) **EP 3 850 467 B1**
(45) Date of publication and mention of the grant of the patent: **23.08.2023**
(21) Application number: 19773666.3
(22) Date of filing: 11.09.2019
(51) Int. Cl.: G06F 3/01, G06V 20/20

(54) **METHOD, DEVICE, AND SYSTEM FOR DELIVERING RECOMMENDATIONS**
VERFAHREN, VORRICHTUNG UND SYSTEM ZUR ABGABE VON EMPFEHLUNGEN
PROCÉDÉ, DISPOSITIF ET SYSTÈME POUR FOURNIR DES RECOMMANDATIONS

(30) Priority: 11.09.2018 US 201862729960 P
(43) Date of publication of application: 21.07.2021
(60) Divisional application: 23156861.9
(73) Proprietor: Apple Inc., Cupertino, CA 95014 (US)
(72) Inventor: LI LAI, Alvin, Cupertino, California 95014 (US); CARO, Perry A., Cupertino, California 95014 (US); ROCKWELL, Michael J., Cupertino, California 95014 (US); DUGGINENI, Venu Madhav, Cupertino, California 95014 (US); DESAI, Ranjit, Cupertino, California 95014 (US)
(74) Representative: Wardle, Callum Tarn
(86) International application number: PCT/US2019/050498
(87) International publication number: WO 2020/055935

(56) References cited:
- US-A1- 2014 125 574
- US-A1- 2014 198 129
- US-A1- 2016 055 377

## Description

### TECHNICAL FIELD

This relates generally to delivering recommendations, including but not limited to, electronic devices that enable the delivery of optimal recommendations in computer-generated reality environments.

### BACKGROUND

A physical environment refers to a physical world that people can sense and/or interact with without aid of electronic systems. Physical environments, such as a physical park, include physical articles, such as physical trees, physical buildings, and physical people. People can directly sense and/or interact with the physical environment, such as through sight, touch, hearing, taste, and smell.

In contrast, a computer-generated reality (CGR) environment refers to a wholly or partially simulated environment that people sense and/or interact with via an electronic system. In CGR, a subset of a person's physical motions, or representations thereof, are tracked, and, in response, one or more characteristics of one or more virtual objects simulated in the CGR environment are adjusted in a manner that comports with at least one law of physics. For example, a CGR system may detect a person's head turning and, in response, adjust graphical content and an acoustic field presented to the person in a manner similar to how such views and sounds would change in a physical environment. In some situations (e.g., for accessibility reasons), adjustments to characteristic(s) of virtual object(s) in a CGR environment may be made in response to representations of physical motions (e.g., vocal commands).

A person may sense and/or interact with a CGR object using any one of their senses, including sight, sound, touch, taste, and smell. For example, a person may sense and/or interact with audio objects that create 3D or spatial audio environment that provides the perception of point audio sources in 3D space. In another example, audio objects may enable audio transparency, which selectively incorporates ambient sounds from the physical environment with or without computer-generated audio. In some CGR environments, a person may sense and/or interact only with audio objects.

Examples of CGR include virtual reality and mixed reality.

A virtual reality (VR) environment refers to a simulated environment that is designed to be based entirely on computer-generated sensory inputs for one or more senses. A VR environment comprises a plurality of virtual objects with which a person may sense and/or interact. For example, computer-generated imagery of trees, buildings, and avatars representing people are examples of virtual objects. A person may sense and/or interact with virtual objects in the VR environment through a simulation of the person's presence within the computer-generated environment, and/or through a simulation of a subset of the person's physical movements within the computer-generated environment.

In contrast to a VR environment, which is designed to be based entirely on computer-generated sensory inputs, a mixed reality (MR) environment refers to a simulated environment that is designed to incorporate sensory inputs from the physical environment, or a representation thereof, in addition to including computer-generated sensory inputs (e.g., virtual objects). On a virtuality continuum, a mixed reality environment is anywhere between, but not including, a wholly physical environment at one end and virtual reality environment at the other end.

In some MR environments, computer-generated sensory inputs may respond to changes in sensory inputs from the physical environment. Also, some electronic systems for presenting an MR environment may track location and/or orientation with respect to the physical environment to enable virtual objects to interact with real objects (that is, physical articles from the physical environment or representations thereof). For example, a system may account for movements so that a virtual tree appears stationery with respect to the physical ground.

Examples of mixed realities include augmented reality and augmented virtuality.

An augmented reality (AR) environment refers to a simulated environment in which one or more virtual objects are superimposed over a physical environment, or a representation thereof. For example, an electronic system for presenting an AR environment may have a transparent or translucent display through which a person may directly view the physical environment. The system may be configured to present virtual objects on the transparent or translucent display, so that a person, using the system, perceives the virtual objects superimposed over the physical environment. Alternatively, a system may have an opaque display and one or more imaging sensors that capture images or video of the physical environment, which are representations of the physical environment. The system composites the images or video with virtual objects, and presents the composition on the opaque display. A person, using the system, indirectly views the physical environment by way of the images or video of the physical environment, and perceives the virtual objects superimposed over the physical environment. As used herein, a video of the physical environment shown on an opaque display is called "pass-through video," meaning a system uses one or more image sensor(s) to capture images of the physical environment, and uses those images in presenting the AR environment on the opaque display. Further alternatively, a system may have a projection system that projects virtual objects into the physical environment, for example, as a hologram or on a physical surface, so that a person, using the system, perceives the virtual objects superimposed over the physical environment.

An augmented reality environment also refers to a simulated environment in which a representation of a physical environment is transformed by computer-generated sensory information. For example, in providing pass-through video, a system may transform one or more sensor images to impose a select perspective (e.g., viewpoint) different than the perspective captured by the imaging sensors. As another example, a representation of a physical environment may be transformed by graphically modifying (e.g., enlarging) portions thereof, such that the modified portion may be representative but not photorealistic versions of the originally captured images. As a further example, a representation of a physical environment may be transformed by graphically eliminating or obfuscating portions thereof.

An augmented virtuality (AV) environment refers to a simulated environment in which a virtual or computer generated environment incorporates one or more sensory inputs from the physical environment. The sensory inputs may be representations of one or more characteristics of the physical environment. For example, an AV park may have virtual trees and virtual buildings, but people with faces photorealistically reproduced from images taken of physical people. As another example, a virtual object may adopt a shape or color of a physical article imaged by one or more imaging sensors. As a further example, a virtual object may adopt shadows consistent with the position of the sun in the physical environment.

There are many different types of electronic systems that enable a person to sense and/or interact with various CGR environments. Examples include smartphones, tablets, desktop/laptop computers, head-mounted systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback and/or cameras having hand tracking and/or other body pose estimation abilities).

A head-mounted system may have one or more speaker(s) and an integrated opaque display. Alternatively, a head-mounted system may be a head-mounted enclosure (HME) configured to accept an external opaque display (e.g., a smartphone). The head-mounted system may incorporate one or more imaging sensors to capture images or video of the physical environment, and/or one or more microphones to capture audio of the physical environment. Rather than an opaque display, a head-mounted system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one implementation, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

CGR (AR) technology has the potential to be an integral part of a user's everyday life. Devices that implement CGR can provide information to the user pertaining to many aspects, from navigation, to weather, to architecture, to games, and much more. However, the information provided to the user can be overwhelming and may not pertain to the user's interests. US2014198129A1 describes an apparatus and method for controlling an augmented reality device. US2016055377A1 describes real-time analytics to identify visual objects of interest.

### SUMMARY

The present invention provides a solution for the mentioned problems according to the independent claims. Preferred embodiments are provided by the dependent claims.

### BRIEF DESCRIPTION OF THE DRAWINGS

For a better understanding of the various described embodiments, reference should be made to the Description of Embodiments below, in conjunction with the following drawings in which like reference numerals refer to corresponding parts throughout the figures.
Figure 1 is a block diagram of an exemplary operating environment in accordance with some implementations.
Figures 2A-2G illustrate example user interfaces for rendering user-specific computer-generated reality (CGR) content items in accordance with some embodiments.
Figure 3 illustrates an example abstract block diagram for generating user-specific CGR content in accordance with some embodiments.
Figures 4A-4C illustrate example user interfaces for recommending user-specific CGR content items based on update user context and/or poses in accordance with some embodiments.
Figure 5 illustrates an example abstract block diagram for delivering optimal recommendations in CGR environment in accordance with some embodiments.
Figure 6 illustrates a flow diagram of a method of rendering user-specific CGR content items in accordance with some embodiments.
Figure 7 illustrates a flow diagram of a method of generating recommended CGR content in accordance with some embodiments.
Figure 8 is a block diagram of a computing device in accordance with some embodiments.

### DESCRIPTION OF EMBODIMENTS

Numerous details are described in order to provide a thorough understanding of the example implementations shown in the drawings. Moreover, well-known systems, methods, components, devices and circuits have not been described in exhaustive detail so as not to obscure more pertinent aspects of the example implementations described herein.

In embodiments described below, pass-through image data characterizing a field of view captured by an image sensor is composited with one or more computer-generated reality (CGR) content items. The one or more CGR content items are associated with a recognized subject in the pass-through image data and the recognized subject in the pass-through image data satisfies a confidence score threshold. In the composited image, the one or more CGR content items are placed proximate to the recognized subject in the field of view. Accordingly, the embodiments described below provide a seamless integration of user-specific content. The user-specific content is generated and displayed to a user based on likelihoods of user interests. For example, a cupcake recipe or nutritional information for a cupcake are generated and displayed to the user when a cupcake is recognized within the user's field of view. As such, the recommended CGR content items generated according to various embodiments described herein allow the user to remain immersed in their experience without having to manually enter in search queries or indicate preferences. The seamless integration also reduces power usage and improves battery life of the device by enabling the user to use the device more quickly and efficiently.

In embodiments described below, a set of subjects associated with a pose of a device is obtained and likelihood estimate values for each of the set of subjects are determined based on user context and the pose. Recommended content or actions associated with at least one respective subject in the set of subjects are generated. The recommended content or actions are generated using at least one classifier associated with the at least one respective subject in response to determining that at least one likelihood estimate value for the at least one respective subject in the set of subjects exceeds a confidence threshold. As such, the embodiments described below provide a process for generating recommended CGR content based on how likely a user will be interested in a subject. The content recommendation according to various embodiments described herein thus provides a seamless user experience that requires less time and user inputs when locating for information or next action. This also reduces power usage and improves battery life of the device by enabling the user to use the device more quickly and efficiently.

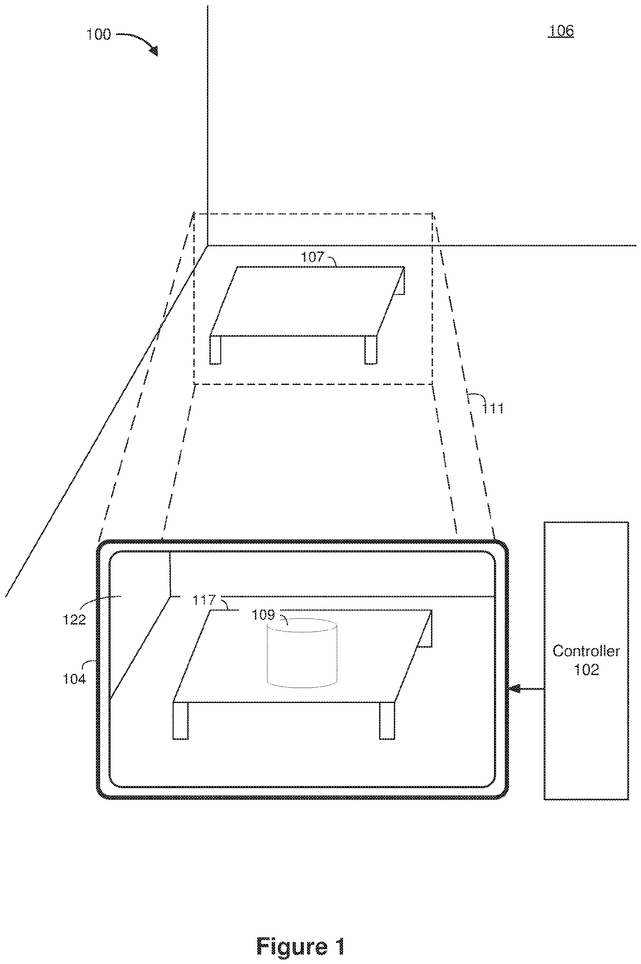

Figure 1 is a block diagram of an exemplary operating environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating environment 100 includes a controller 102 and a CGR device 104. In the example of Figure 1, the CGR device 104 is worn by a user 10.

In some implementations, the CGR device 104 corresponds to a tablet or mobile phone. In various implementations, the CGR device 104 corresponds to a head-mounted system, such as a head-mounted device (HMD) or a head-mounted enclosure (HME) having a tablet or mobile phone inserted therein. In some implementations, the CGR device 104 is configured to present CGR content to a user. In some implementations, the CGR device 104 includes a suitable combination of software, firmware, and/or hardware.

According to some implementations, the CGR device 104 presents, via a display 122, CGR content to the user while the user is virtually and/or physically present within a scene 106. In some implementations, the CGR device 104 is configured to present virtual content (e.g., the virtual cylinder 109) and to enable video pass-through of the scene 106 (e.g., including a representation 117 of the table 107) on a display. In some implementations, the CGR device 104 is configured to present virtual content and to enable optical see-through of the scene 106

In some implementations, the user holds the CGR device 104 in his/her hand(s). In some implementations, the user wears the CGR device 104 on his/her head. As such, the CGR device 104 includes one or more CGR displays provided to display the CGR content. For example, the CGR device 104 encloses the field-of-view of the user. In some implementations, the CGR device 104 is replaced with a CGR chamber, enclosure, or room configured to present CGR content in which the user does not wear the CGR device 104.

In some implementations, the controller 102 is configured to manage and coordinate presentation of CGR content for the user. In some implementations, the controller 102 includes a suitable combination of software, firmware, and/or hardware. In some implementations, the controller 102 is a computing device that is local or remote relative to the scene 106. For example, the controller 102 is a local server located within the scene 106. In another example, the controller 102 is a remote server located outside of the scene 106 (e.g., a cloud server, central server, etc.). In some implementations, the controller 102 is communicatively coupled with the CGR device 104 via one or more wired or wireless communication channels 144 (e.g., BLUETOOTH, IEEE 802.11x, IEEE 802.16x, IEEE 802.3x, etc.). In some implementations, the functionalities of the controller 102 are provided by and/or combined with the CGR device 104.

As illustrated in Figure 1, the CGR device 104 presents a representation of the scene 106. In some implementations, the representation of the scene 106 is generated by the controller 102 and/or the CGR device 104. In some implementations, the representation of the scene 106 includes a virtual scene that is a simulated replacement of the scene 106. In other words, in some implementations, the representation of the scene 106 is simulated by the controller 102 and/or the CGR device 104. In such implementations, the representation of the scene 106 is different from the scene 106 where the CGR device 104 is located. In some implementations, the representation of the scene 106 includes an augmented scene that is a modified version of the scene 106 (e.g., including the virtual cylinder 109). For example, in some implementations, the controller 102 and/or the CGR device 104 modify (e.g., augment) the scene 106 in order to generate the representation of the scene 106. In some implementations, the controller 102 and/or the CGR device 104 generate the representation of the scene 106 by simulating a replica of the scene 106. In some implementations, the controller 102 and/or the CGR device 104 generate the representation of the scene 106 by removing and/or adding items from the simulated replica of the scene 106.

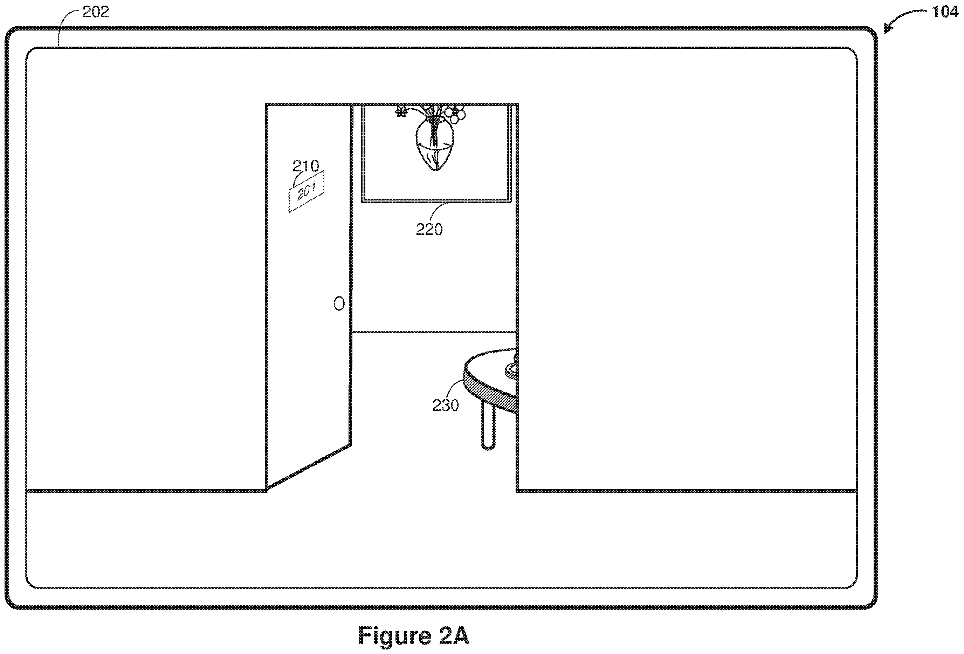

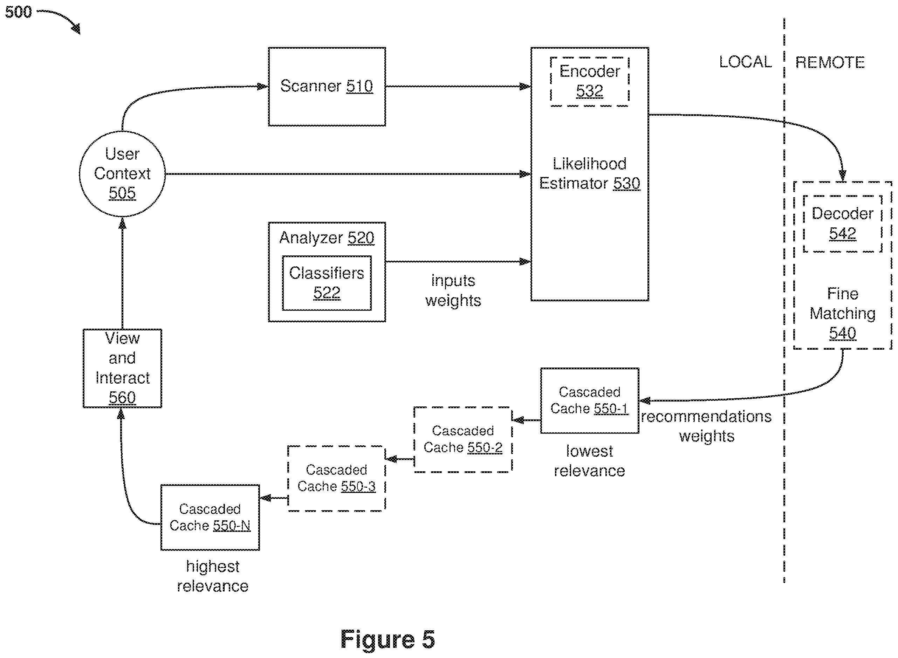

Figures 2A-2G illustrate exemplary user interfaces for rendering user-specific computer-generated reality (CGR) content in accordance with some embodiments. The user interfaces in these figures are used to illustrate the processes described below, including the process in Figure 5. In some embodiments, the device detects inputs via an input device that is separate from the display (e.g., a head mounted device (HMD) with voice activated commands, a laptop with a separate touchpad and display, or a desktop with a separate mouse and display).

As shown in Figure 2A, the device 104 displays a media capture/interaction interface 202. According to some embodiments, the media capture/interaction interface 202 that displays a scene with subjects in a field of view of an image sensor. The image data (or pass-through image data) representing the scene are captured by the image sensor. In some embodiments, the pass-through image data includes a preview image, a surface image (e.g., planar surface), depth mappings, anchor coordinates (e.g., for depth mappings), and/or the like. In some embodiments, the pass-through image data includes not only visual content, but also includes audio content, 3D renderings, timestamps (of actual frame displayed), a header file (e.g., camera settings such as contrast, saturation, white balance, etc.), and/or metadata.

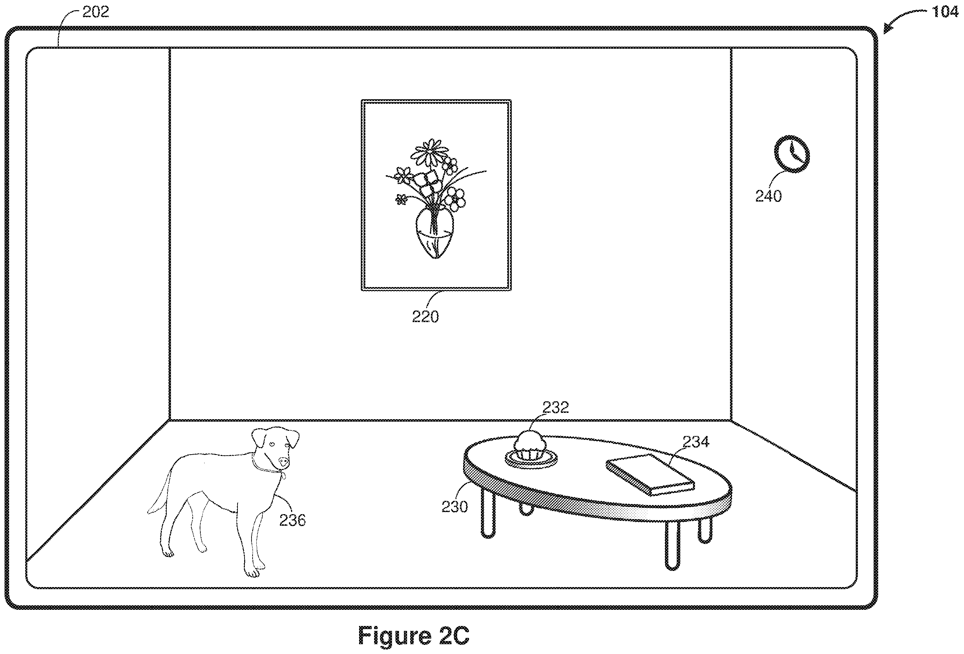

As explained above with reference to Figure 1, in some embodiments, the image sensor for capturing the scene is part of the device 104 or attached to the device 104; while in some other embodiments, the image sensor is detached from the device 104, e.g., on a camera remote from the device104. In various embodiments, the scene changes as the field of view of the image sensor changes, as will be shown below with reference to Figures 2C-2G. In Figure 2A, the media capture/interaction interface 202 includes an open doorway with a door sign 210 labeled as "201". The media capture/interaction interface 202 also shows through the open doorway a picture frame 220 and a table 230 in the room.

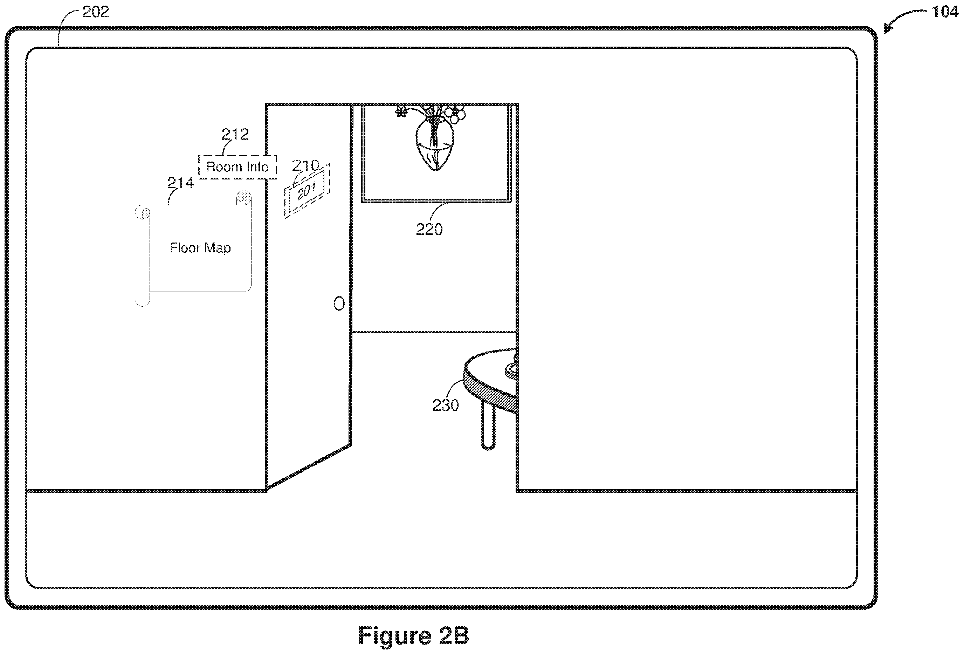

Figure 2B shows a composited pass-through image data rendering with CGR content items in the media capture/interaction interface 202. According to some embodiments, the composited pass-through image data includes information, e.g., room information 212 and a floor map 214 associated with the room. The room information 212 and the floor map 214 are CGR content items generated based on the device 104 recognizing the door sign 210 and determining that the user is interested in learning more about the room and the building. In some embodiments, as indicated by the dotted line around the door sign 210, the recognized subject in the field of view is emphasized to indicate the association of the additional CGR content items 212 and 214 with the recognized subject 210. In some embodiments, the CGR content items 212 and 214 are animated (e.g., flashing, shrinking/enlarging, moving, etc.) near the recognized subject 210 to indicate the association with the recognized subject 210. In some embodiments, in addition to or in place of displaying the CGR content items 212 and 214 on the display of the device 104, audio content is played as the CGR content items, e.g., reading the door sign, the room information, and/or the floor map to the user.

Figures 2B-2C illustrate a sequence in which the media capture/interaction interface 202 is updated based on a change of the field of view of the image sensor. The perspective or vantage point of the image sensor changes between Figures 2B-2C. For example, in Figure 2C, the doorway is no longer displayed in the media capture/interaction interface 202 indicating the user has entered the room. As a result, the CGR content items 212 and 214 associated with the door sign 210 as shown in Figure 2B are no longer provided to the user. Instead, as the user enters the room, the user has a full view of the room. As a result, as shown in Figure 2C, the media capture/interaction interface 202 displays three walls of the room. The media capture/interaction interface 202 also displays the picture frame 220, the table 230, a clock 240, and a dog 236 in the room. Additionally, as shown in Figure 2C, the media capture/interaction interface 202 displays a cupcake 232 and a book 234 on the table 230.

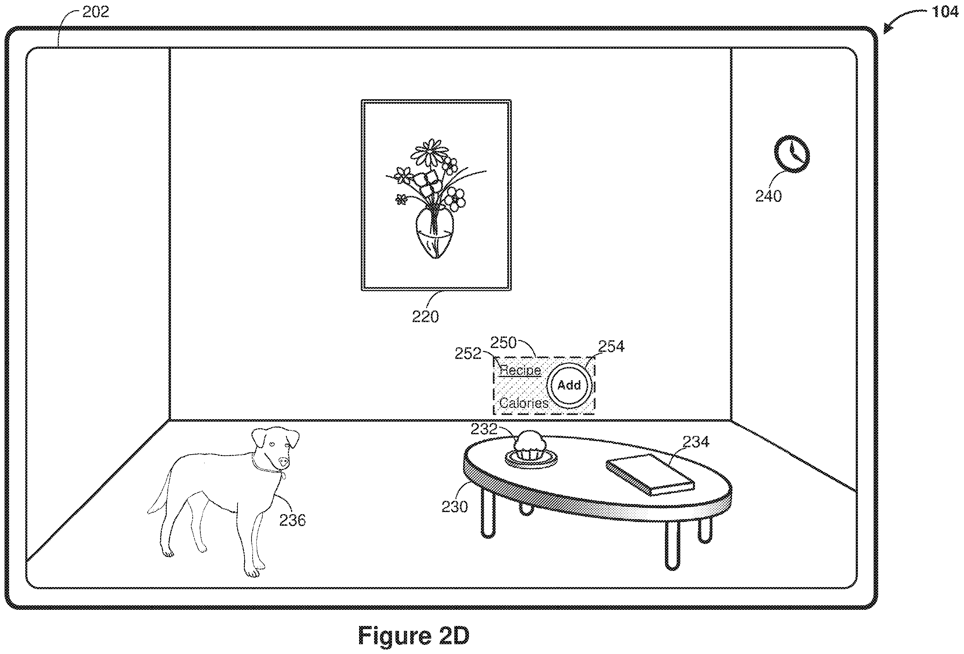

Figures 2D-2E illustrate different CGR content items rendered to the user based on different user context. In Figure 2D, the composited pass-through image data includes an CGR content item 250 associated with the cupcake 232. The CGR content item 250 is rendered adjacent to or relative to the cupcake 232. Further, the CGR content item 250 includes information associated with the cupcake 232, e.g., calories of the cupcake, and affordances including a link 252 to a recipe for the cupcake 232 and a button 254 for adding the cupcake 232 to a dietary log. The affordances 252 are provided as options to the user in order to perform an action associated with the cupcake 232, e.g., tapping on the link 252 to find out the receipt for the or clicking the button 254 to add the cupcake 232 to a dietary log.

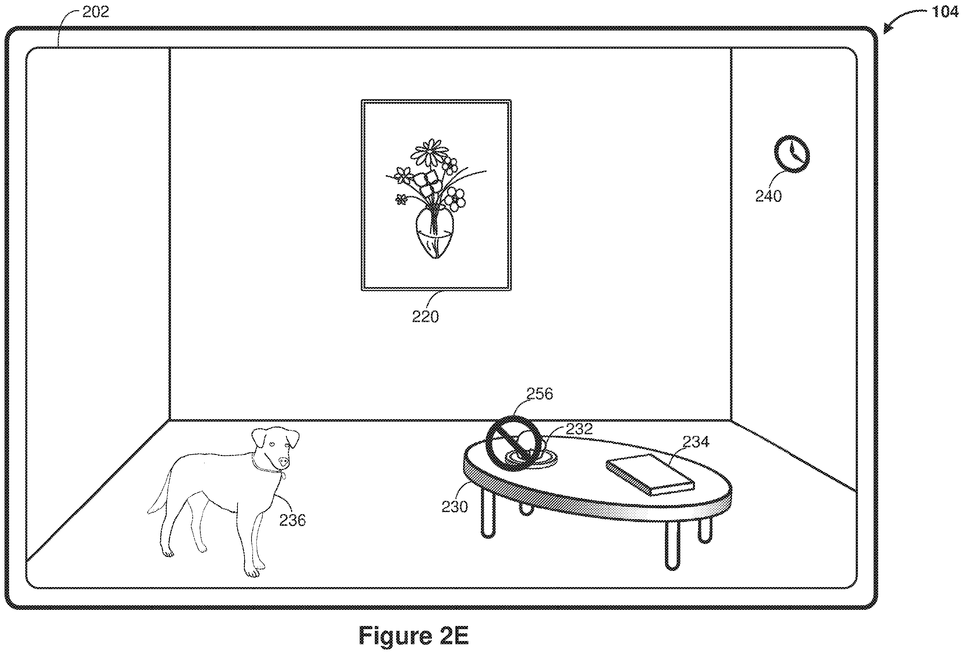

The CGR content item 250 shown in Figure 2D is generated based on a determination that the user is interested in the cupcake 232 and a recommendation is made to provide information regarding the cupcake 232. In comparison, Figure 2E illustrates a different CGR content item 256, which overlays on the cupcake 232. While the user is still interested in the cupcake 232, the CGR content item 256 is made based on a different user context, e.g., the user has a dietary restriction, etc.

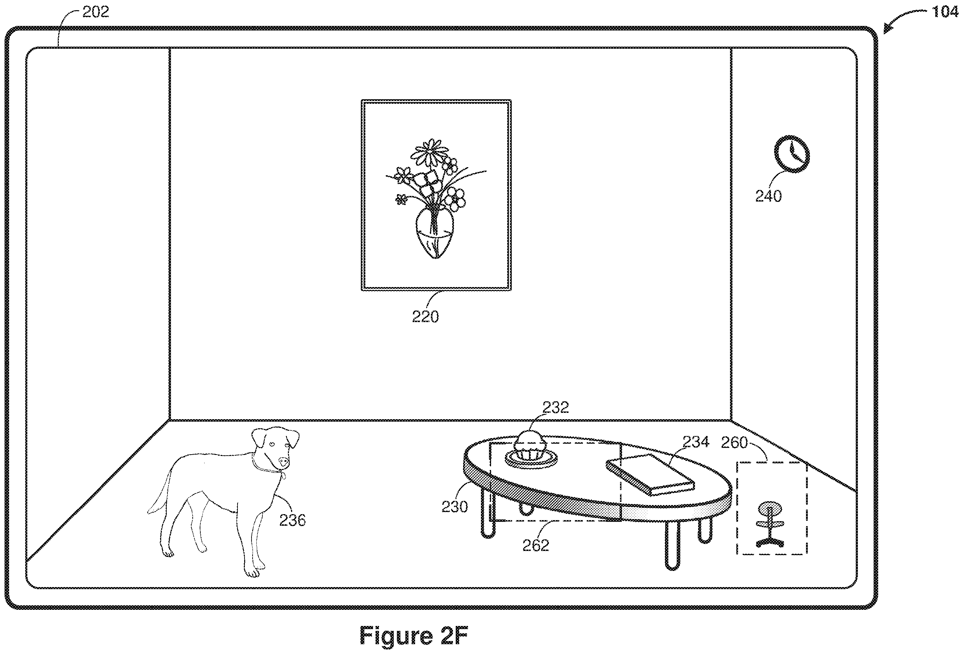

Figure 2F illustrates an CGR content item 260 proximate to the recognized subject (e.g., the table 230), where the CGR content item 260 is generated in response to detecting gaze proximate to a region 262 containing at least part of the recognized subject 230. In Figure 2F, the device 104 detects the region 262 proximate to the gaze which includes part of the table 230, part of the cupcake 232 on the table 230, and part of the book 234 on the table 230. The device 104 recognizes the table 230 using a subset of the pass-through image data corresponding to the region 262 and applying a table classifier to the subset of image data.

In some embodiments, the table classifier is selected based on weights assigned to a cluster of classifiers. In some embodiments, the classifiers correspond to entries in a library of objects/subjects, e.g., shapes, numbers, animals, foods, plants, people, dogs, squares, flowers, shapes, lighting, or the like. Using one or more classifiers, a subject can be recognized in the image data. During the subject recognition, weights are assigned to different classifiers and one or more classifiers can be selected based on the weight associated with each classifier. The selected classifier(s) can then be used for recognizing a subject in the image data.

For example, based on the gaze proximate to the region 262, weights are assigned to the table classifier, a cupcake classifier, and a book classifier. As the gaze settles on the table surface, the weight assigned to the table classifier increases, while the weights assigned to the cupcake classifier and the book classifier decrease. Based on the weights assigned to the classifiers, the table classifier is selected for identifying the table subject 230 proximate to the gaze region 262. Having recognized the table 230, the device 104 renders the CGR content 260, such as recommendations of a chair which may match the style of the table 230, adjacent to the table 230.

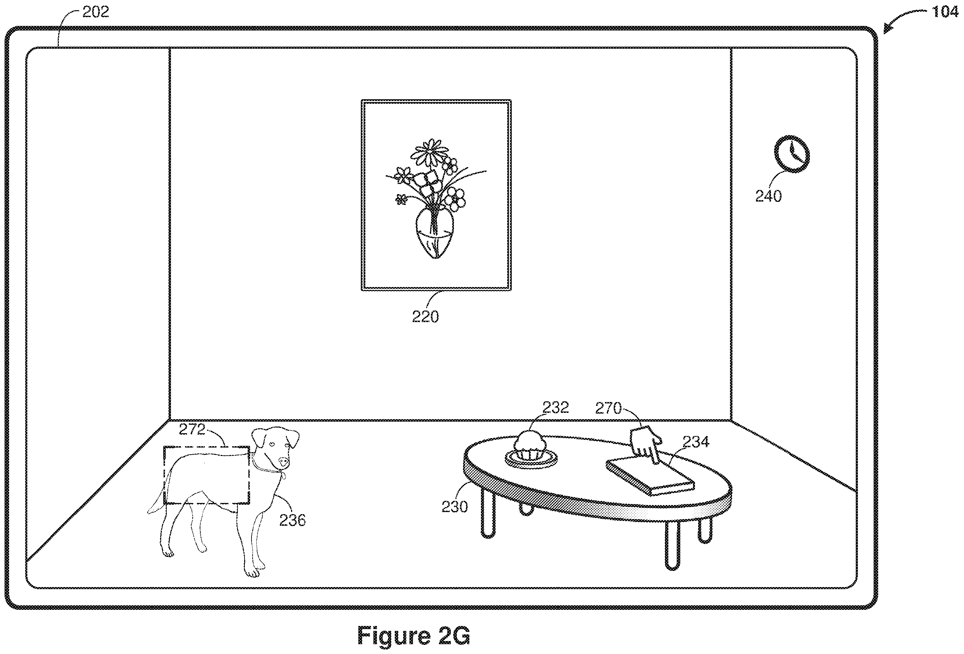

Figure 2G illustrates a CGR content item 270 (e.g., a hand icon in a pointing configuration) proximate to the recognized subject 234, where a gaze region 272 is within a threshold distance from the recognized subject 234. In Figure 2G, the device 104 detects that the gaze region 272 is on a dog 236 in the field of view. However, based on user context, it is unlikely that the user is interested in seeing more information about the dog 236 displayed in the media capture/interaction interface 202, e g., the user is afraid of animals. Further based on the user context, the device determines that the book 234 is more of interest to the user (e.g., the user recently obtained the book 234 from a library) and the book 234 is within a threshold distance from the gaze region 272. Subsequently, the device 104 expands the gaze region 272 so that more subjects are included in the region and analyzed. The book 234 is then recognized from image data corresponding to the expanded gaze region and the CGR content item 270 is generated and rendered above the book 234.

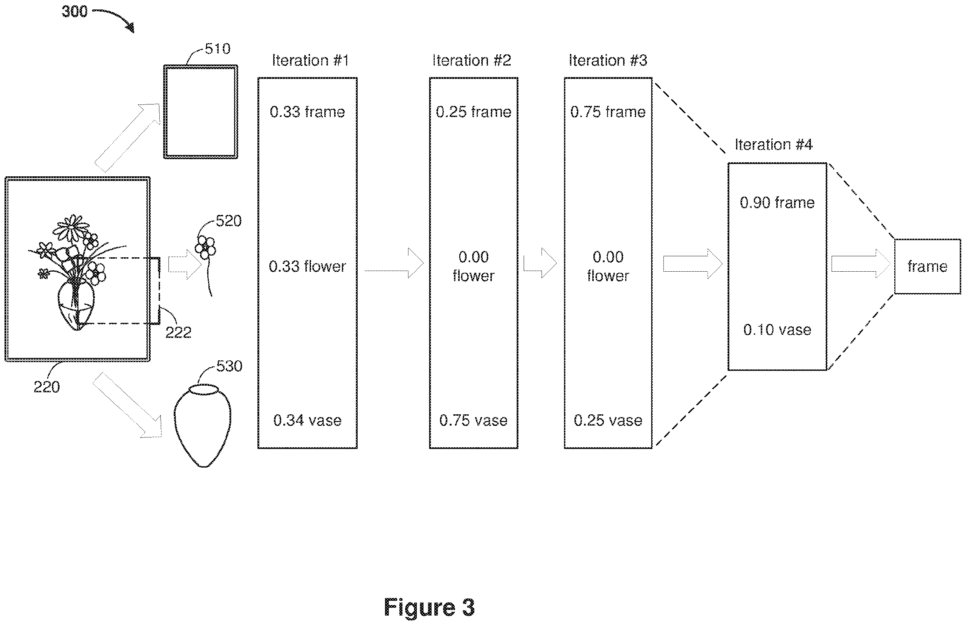

Figure 2G shows that the CGR content item 270 is generated for a specific user through the likelihood estimation, where *a priori* information about the user as well as current pass-through image data are inputs. This is particularly useful when the recognized subject includes multiple searchable elements and each is associated with at least classifier. For example, in Figures 2A-2G, the picture frame 220 includes multiple searchable elements, including the frame itself, the vase in the picture, and the flowers in the pictured vase. In order to differentiate these searchable elements and generate CGR content items for an element that the user will most likely be interested in, content recommendations are fine-tuned as described below in greater detail with reference to Figure 3.

Figure 3 illustrates an abstract block diagram associated with a multi-iteration process 300 for identifying a subject that the user is most likely interested. While pertinent features are shown, those of ordinary skill in the art will appreciate from the present disclosure that various other features have not been illustrated for the sake of brevity and so as not to obscure more pertinent aspects of the example embodiments disclosed herein. To that end, as a non-limiting example, in Figure 3, as a gaze region 222 is proximate to the picture frame 220 in the field of view, the picture frame 220 includes multiple searchable elements including the frame 510, the flower 520, and the vase 530, and each of which is proximate to the gaze region. The likelihood estimate values are determined during multi-iterations.

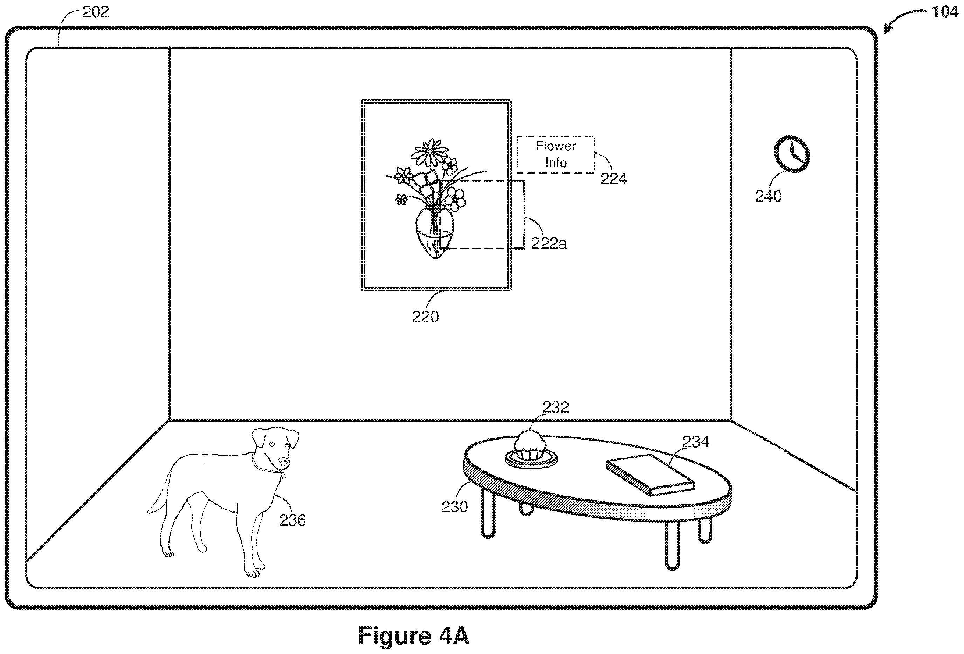

In some embodiments, each of the likelihood estimate values is assigned an initial value, e.g., all likelihood estimate values are 0 or the likelihood estimate values are equally distributed. As shown in Figure 3, during the first iteration, the likelihood estimate values for the frame 510, the flower 520, and the vase 530 are equally assigned to approximately 1/3, e.g., 0.33 for the frame 510, 0.33 for the flower 520, and 0.34 for the vase 530. During the second iteration, the likelihood estimate values are updated to reflect what the user is interested in at a next time step after the first iteration. Further, as will be described in detail below with reference to Figures 4A-4C, changes in poses and/or the user context can contribute to the changes in the likelihood estimate value. Thus, during the second iteration the likelihood estimate value for the frame 510 is 0.25, the likelihood estimate value for the flower 520 is 0.00, and the likelihood estimate value for the vase 530 is 0.75. Likewise, during the third iteration, more changes in poses and/or the user context cause the likelihood estimate value for the frame 510 changes to 0.75, for the flower 520 to 0.00, and for the vase 530 to 0.25. While the likelihood estimate value of 0.00 for the flower 520 indicates most likely the user is not interesting in learning more about the flower 520, in some embodiments, the device would need more iteration(s) to identify one element that the user is most interested in, e.g., the values of 0.25 and 0.75 do not exceed a confidence threshold. As shown in Figure 3, during the fourth and final iteration, the likelihood estimate value for the frame 510 has increased to 0.90, indicating that the user is most likely interested in the frame itself, not the picture depicted in the frame.

The selection process illustrated in Figure 3 is funnel shaped, such that over time, e.g., after the second and third iterations or a threshold amount of time, the likelihood estimate values below a threshold value (e.g., the flower with the likelihood estimate value of 0.00) are not included in the next iteration. After multiple iterations, the likelihood estimate values are converged to a particular value, so that recommendations can be made for the particular subject that the user is most likely interested in.

Turning to Figures 4A-4C, Figures 4A-4C illustrate exemplary user interfaces for rendering user-specific CGR content items based on user context and/or poses in accordance with some embodiments. The exemplary user interfaces are used to illustrate a recommended content generation process in Figure 5.

For example, in Figure 4A, the device 104 detects a gaze region 222, as indicated by the dotted line, proximate to the picture frame 220 based on a pose of the device 104. The picture frame 220 includes the frame itself, the vase in the picture, and the flowers in the pictured vase. The likelihood estimator of the device 104 determines the likelihood estimate values for each of the subjects, e.g., the likelihood estimate value for the frame, the likelihood estimate value for the vase, and the likelihood estimate value for the flowers. In some embodiments, the likelihood estimate values are determined based on both user context and the pose. In Figure 4A, the gaze region 222a is proximate to the frame, the vase, and the flowers. Using the user context, e.g., the user is a botanist, not an artist, it is more likely that the user is interested in the flowers pictured in the frame 220. Thus, the device 104 generates recommended content 224 to provide flower information to the user.

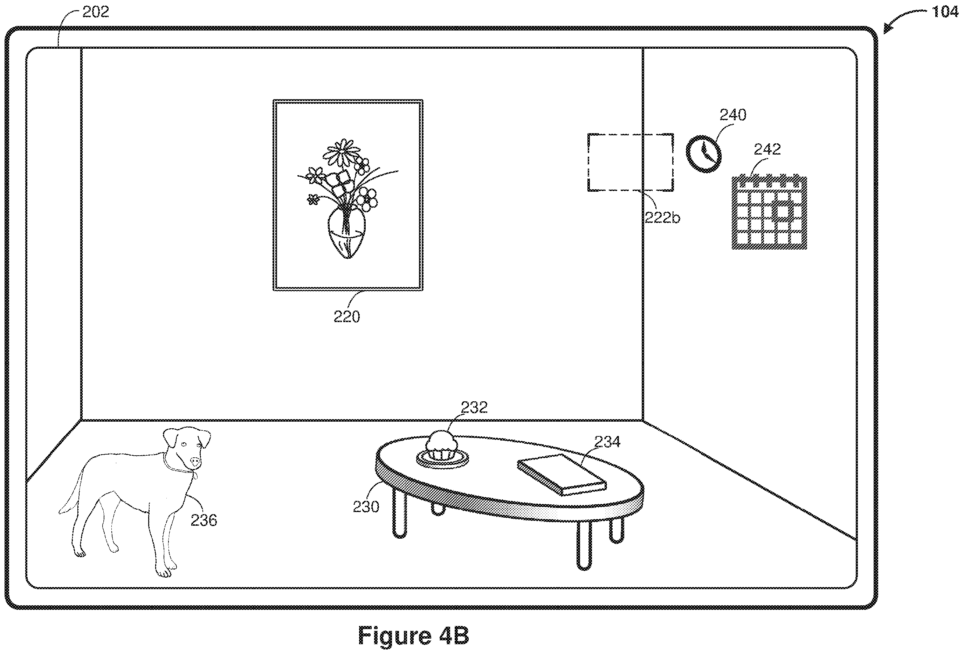

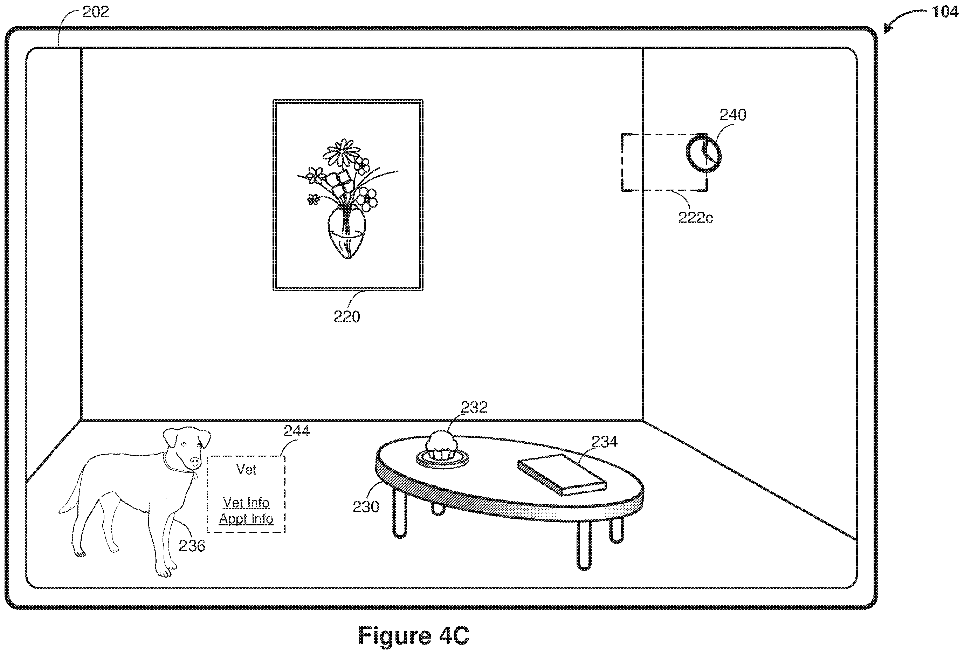

Figures 4B-4C illustrate that the media capture/interaction interface 202 is updated relative to the interface shown in Figure 4A. Relative to the view shown in Figure 4A, the perspective or vantage point of the device 104 as shown in Figures 4B-4C changes as the field of view shifts to the right, e.g., due to movements of the device 104. As the gaze shifts to the right, the gaze region 222b moves away from the picture frame 220 in the center and moves to the right. Figure 4B shows that as a result of the pose change, the device 104 predicts that the clock on the right wall is the subject of interest to the user, and an event calendar 242 adjacent to the clock 240 is generated. Figure 4C shows that as the gaze region 222c moves even closer to the clock 240, another recommended content 244 is shown in the interface 202. The recommended content 244 is generated based on the user context that it is time for a veterinarian visit, and the user is more interested in getting information associated with the dog 236 in preparation for the veterinarian visit.

Figure 5 illustrates an abstract block diagram associated with a process 500 for delivering optimal recommendations in a CGR environment in accordance with some embodiments. While pertinent features are shown, those of ordinary skill in the art will appreciate from the present disclosure that various other features have not been illustrated for the sake of brevity and so as not to obscure more pertinent aspects of the example embodiments disclosed herein. For example, the system implementing the process 500 can be a heterogeneous system comprising multiple distributed devices. As such, as indicated by the dotted line, some components that perform computational resource intensive tasks are implemented on remote agents and can be reconfigured dynamically between local, peer-to-peer, and distributed agents.

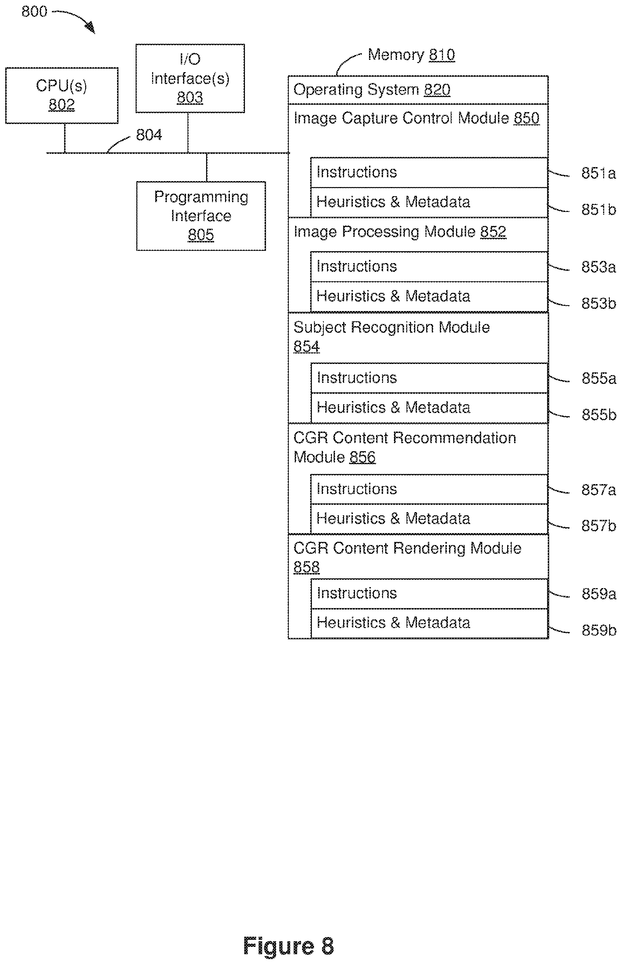

As shown in Figure 5, a scanner 510 (e.g., the image capture control module 850 in Figure 8) obtains images and derives image data or pass-through image data. In some embodiments, the pass-through image data includes audio content, visual content, 3D renderings, timestamps (of actual frame displayed), header file (contains all of the camera settings: contrast, saturation, white balance, etc.), and/or metadata. In some embodiments, the pass-through image data includes a preview image, a surface image (e.g., planar surface), depth mappings, anchor coordinates (e.g., for depth mappings). In some embodiments, along with the pass-through image data, the scanner 510 also provides a pose information of the device, e.g., a focal point within the field of view of the image sensor, a distance of the image sensor to the plurality of real world objects, percentage of visual space occupied by the subjects in the field of view, and/or current gaze, etc.

In some embodiments, user context 505 is specified in a user-specific recommendation profile. In some embodiments, the user-specific recommendation profile includes user history, user-specific list, user-enabled modules (e.g., career-specific or task specific such as engine repair), and/or the like.

In some embodiments, an analyzer 520 includes a plurality of classifiers 522. In some embodiments, the plurality of classifiers 522 correspond to entries in a library of subjects, e.g., shapes, numbers, animals, foods, plants, people, etc. The classifiers are provided to a likelihood estimator 530 along with associated weights, e.g., a dog classifier for identifying a dog, etc.

Along with the inputs from the analyzer 520, the likelihood estimator 530 receives the image data and pose information from the scanner 510 and receives the user context 505. Based on the received information, the likelihood estimator 530 identifies a subject in the field of view that the user is most likely interested in and generates recommended CGR content items 560 for the user to view and/or interact as shown in Figures 2A-2G and 4A-4C.

In some embodiments, cascaded caches 550-1, 550-2, 550-3...550-N are used to facilitate the subject identification and CGR content item recommendation. Subjects and the associated recommendations are stored in the cascaded caches in the order of weights. For example, during one iteration, the first cascaded cache 550-1 stores a subject with the lowest recommendation weight and the last cascaded cache 550-N stores a subject with the highest recommendation weight. As such, the first cascaded cache 550-1 includes information about the subject that is determined to be the least important or relevant to the user at this stage and the last cascaded cache 550-N includes information about the subject that is determined to the most important or relevant to the user at this stage. During subsequent stages or iterations as shown in Figure 3, the information stored in the cascaded caches 550 can be adjusted according to user context and/or pose changes.

In some embodiments, fine matching 540 is performed to fine-tune the results from the likelihood estimator 530. In some embodiments, the fine matching 540 is performed remotely (e.g., at a second device) to conserve computational resources of the local device. In such embodiments, an encoder 532 is used to reduce the vector dimensionality for efficient communication of the data to the remote source. Upon receiving the encoded data, a decoder 542 on the remote source decodes the data before fine grained matching is performed. In some embodiments, at the remote source, machine learning is applied across multiple users so that better recommendations can be generated for a particular user.

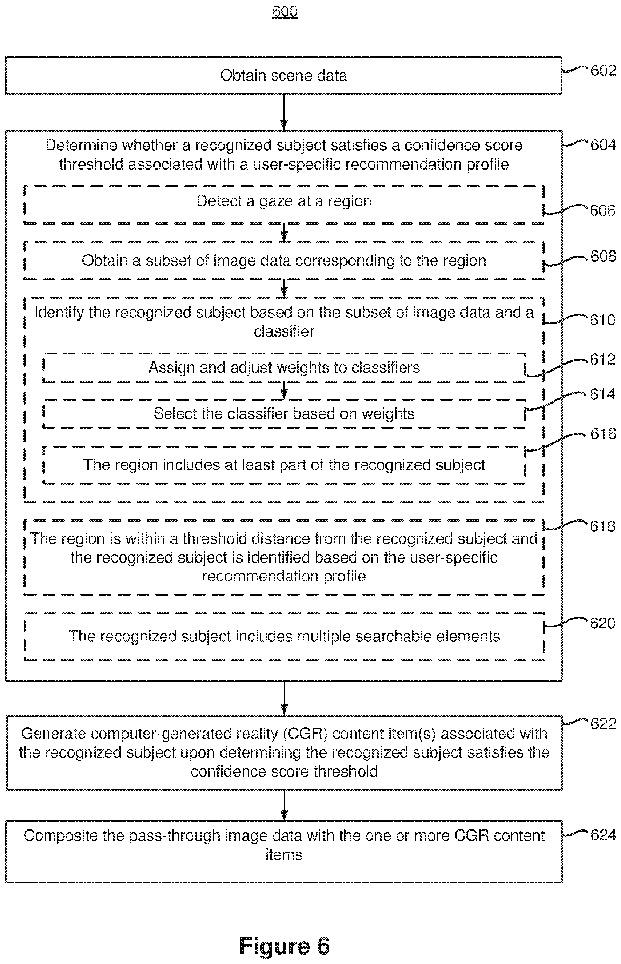

Figure 6 is a flowchart representation of a method 600 of rendering user-specific CGR content items in accordance with some embodiments. In some embodiments (and as detailed below as an example), the method 600 is performed by an electronic device (or a portion thereof), such as the electronic device 104 in Figure 1 or the device 300 in Figure 3, that includes one or more processors and a non-transitory memory. In some embodiments, the device also includes an image sensor or camera assembly, a display, and one or more inputs devices. For example, the display and the one or more input devices are combined into a touch screen display. In this example, the electronic device corresponds to a smartphone or a tablet. In another example, the display and the one or more input devices are separate. In this example, the electronic device corresponds to a laptop or desktop computer. For example, the electronic device corresponds to a wearable computing device (including an HMD that encloses or does not enclose the user's eye(s) or a CGR presentation device with one or more CGR displays), smartphone, tablet, laptop computer, desktop computer, kiosk, set-top box (STB), over-the-top (OTT) box, gaming console, and/or the like. In some embodiments, the image sensor is detached from the device, e.g., on a camera remote from the device 104.

In some embodiments, the method 600 is performed by processing logic, including hardware, firmware, software, or a suitable combination thereof. In some embodiments, the method 600 is performed by one or more processors executing code, programs, or instructions stored in a non-transitory computer-readable storage medium (e.g., a non-transitory memory). Some operations in method 600 are, optionally, combined and/or the order of some operations is, optionally, changed. Briefly, the method 600 includes: obtaining pass-through image data characterizing a field of view captured by an image sensor; determining whether a recognized subject in the pass-through image data satisfies a confidence score threshold associated with a user-specific recommendation profile; generating one or more computer-generated reality (CGR) content items associated with the recognized subject in response to determining that the recognized subject in the pass-through image data satisfies the confidence score threshold; and compositing the pass-through image data with the one or more CGR content items, where the one or more CGR content items are proximate to the recognized subject in the field of view.

The method 600 begins, at block 602, with the electronic device obtaining scene data. According to some embodiments, the device 104 or a component thereof (e.g., the image capture control module 850 in Figure 8) obtains scene data (e.g., image data or pass-through image data) by capturing image(s) of a scene from a first reference/vantage point (e.g., a camera position, a pose, or a field of view) with an image sensor or camera assembly. The device 104 or a component thereof (e.g., the image processing module 852 in Figure 8) derives pass-through image data characterizing the field of view. For example, in Figure 2A, the device 104 obtains pass-through image data and displays the media capture/interaction interface 202 that includes a scene corresponding to a room with a door sign 210 on the room door, a table 230, and a picture frame 220 inside the room. Continuing with this example, in Figure 2C, the media capture/interaction interface 202 depicts a scene inside the room, which also includes a clock 240 on the right wall, a dog 236 close to the left wall, and a cupcake 232 and a book 234 on the table 230.

The method 600 continues, at block 604, with the electronic device determining whether a recognized subject in the pass-through image data satisfies a confidence score threshold associated with a user-specific recommendation profile. In other words, the device 104 or a component thereof (e.g., the subject recognition module 854 in Figure 8 or the likelihood estimator 530 in Figure 5) determines whether the user is likely to be interested the recognized subject in the pass-through image data. According to the claimed invention, the electronic device obtained information pertaining to the user's preference based on the user-specific recommendation profile. For example, with reference to Figure 2A, the device 104 determines whether the user is interested in learning more about the room and building associated with the door sign 210 using the user-specific recommendation profile, such as user history, user-specific list, user-enabled modules (e.g., career-specific or task specific such as engine repair), and/or the like.

In some embodiments, the user-specific recommendation profile includes at least one of a context of a user interacting with the device, biometrics of the user, previous searches by the user, or a profile of the user. For example, the context of the user interacting with the device includes a recent order placed by the user from a veterinarian, a cupcake baker, etc. In another example, biometric sensors can be used to measure the biometrics of the user, e.g., elevated blood pressure and/or heart rate indicating the sadness or excitement the user experiences towards a subject. In still another example, the user-specific recommendation profile includes previous searches by the user and the associated actions taken, e.g., the user searched cupcakes multiple times before but decided to say "no" to the cupcakes in all previous occasions. In yet another example, the metadata in the user profile can show *a priori* information for assigning weights and/or likelihood estimate values.

According to the claimed invention, the recognized subject in the pass-through image data is recognized by detecting a gaze at a region in the field of view as represented by block 606, obtaining a subset of the pass-through image data corresponding to the region as represented by block 608, and identifying the recognized subject based on the subset of the pass-through image data and a classifier as presented by block 610. For example, in Figure 2B, upon detecting a gaze at the region proximate to the door sign 210, the device 104 or a component thereof (e.g., the image processing module 852 in Figure 8 or the likelihood estimator 530 in Figure 5) further processes the subset of pass-through image data corresponding to the region proximate to the door sign 210. The device 104 then identifies the door sign 210 using the subset of the pass-through image data and a door sign classifier.

According to the claimed invention, the method 600 further continues, at block 612, with the electronic device assigning weights to classifiers based on the gaze, where each of the classifiers are associated with a subject in the gaze region, and adjusting the weights to the classifiers based on updates to the gaze. In some embodiments, the method 600 further continues, at block 614, with the electronic device selecting the classifier from the classifiers with a highest weight.

For example, in Figure 2C, prior to detecting the gaze, equal weights are assigned to all subjects in the field of view, e.g., equal weights are assigned to the picture frame 220, the table 230, the cupcake 232, the book 234, the clock 240, and the dog 236. Continuing to Figures 2D and 2E, once the gaze settles on the cupcake 232 on top of the table 230, weights associated with the cupcake classifier increases, while weights associated with other classifiers decrease. As a result, the cupcake classifier is chosen from the classifiers in order to recognize the cupcake 232 subject and recommend CGR content items associated with the cupcake 232, e.g., the CGR content item 250 with the link 252 to the cupcake recipe and the add affordance (e.g., the button 254) as shown in Figure 2D or the no-cupcake sign (e.g., the CGR content item 256) as shown in Figure 2E.

In some embodiments, as represented by block 616, the gaze region includes at least part of the recognized subject. For example, in Figure 2F, the gaze region 262 includes part of the table 230, part of the cupcake 232 on the table 230, and part of the book 234 on the table 230. The device 104 recognizes the table 230 using at least part of the table image data and applying a table classifier to table image data in order to identify the table 230. In comparison, in some embodiments, as represented by block 618, the gaze region is within a threshold distance from the recognized subject for CGR content recommendation and the recognized subject is identified based on the user-specific recommendation profile. For example, in Figure 2G, the gaze region 272 is proximate to the dog 236, while the recognized subject is the book 234 on the table 230. The book 234 is identified as the subject the user is most likely interested in because the user-specific recommendation profile indicates the user is more interested in the book 234 than the dog 236 and the book 234 is within a threshold distance from the gaze region 272. As such, the gaze region 272 is expanded to include the book image data, higher weights are assigned to the book classifier, and the book classifier is used to process the expanded image data in order to identify the book 234 as the subject of interest.

In some embodiments, as represented by block 620, the recognized subject includes multiple searchable elements, and each is associated with at least one classifier. For example, the picture frame 220 includes multiple searchable elements, the frame itself, the vase in the picture, and the flowers in the pictured vase. In order to differentiate these searchable elements and generate CGR content item for an element that the user will most likely be interested in, content recommendations are fine-tuned as described above with reference to Figure 3.

Still referring to Figure 6, the method 600 continues, at block 622, with the electronic device generating one or more computer-generated reality (CGR) content items associated with the recognized subject in response to determining that the recognized subject in the pass-through image data satisfies the confidence score threshold. According to some embodiments, the one or more CGR content items generated by the device 104 or a component thereof (e.g., the CGR content recommendation module 856 in Figure 8) include at least one of information associated with the recognized subject or an option to perform an action associated with the recognized subject. For example, the text about the room 212 and the text about the floor 214 as shown in Figure 2B, the store information (e.g., the CGR content item 250), the link 252 to the cupcake receipt, and the button 254 to add the cupcake to a dietary journal as shown in Figure 2D, the no-cupcake sign (e.g. the CGR content item 256) in Figure 2E, the chair recommendation (e.g., the CGR content item 260) as shown in Figure 2F, or the indicator 270 pointing to the book 234 as shown in Figure 2G.

The method 600 continues, at block 624, with the electronic device compositing the pass-through image data with the one or more CGR content items. In some embodiments, the electronic device further rendering the pass-through image data in the field of view with the one or more CGR content items displayed proximate to the recognized subject. In some other embodiments, the one or more CGR content items are displayed adjacent to the recognized subject according to the field of view of the user using the device. For example, in case of CGR-enabled glasses, the camera with the image sensor and the user's optical train may be two separate things. As such, location(s) of the one or more CGR content items can be determined based on the field of view of the image sensor or the user. Alternatively, the field of view of the image sensor and the user can be reconciled, e.g., one may overlay the other. In such embodiments, location(s) of the one or more CGR content items can be determined based on the field of view of the image sensor and the user.

For example, the device 104 or a component thereof (e.g., the CGR content rendering module 858 in Figure 8 or the view and interact module 560 in Figure 5) displays text or signs about the subject next to the subject, e.g., displaying the room information 212 and the floor map 214 next to the door sign 210 as shown in Figure 2A, overlaying the no-cupcake sign 256 on the cupcake 232 as shown in Figure 2E, displaying the chair recommendation (e.g., the CGR content item 260) next to the table 230 as shown in Figure 2F, and floating the pointing sign 270 to the book 234 as shown in Figure 2G. In another example, the device 104 or a component thereof (e.g., the CGR content rendering module 858 in Figure 8 or the view and interact module 560 in Figure 5) displays link to the subject adjacent to the subject, e.g., displaying the link 252 to the cupcake recipe above the cupcake 232 as shown in Figure 2D. In yet another example, the device 104 or a component thereof (e.g., the CGR content rendering module 858 in Figure 8 or the view and interact module 560 in Figure 5) displays interactive affordances adjacent to the subject, e.g., displaying the button 254 next to the cupcake 232 as shown in Figure 2D.

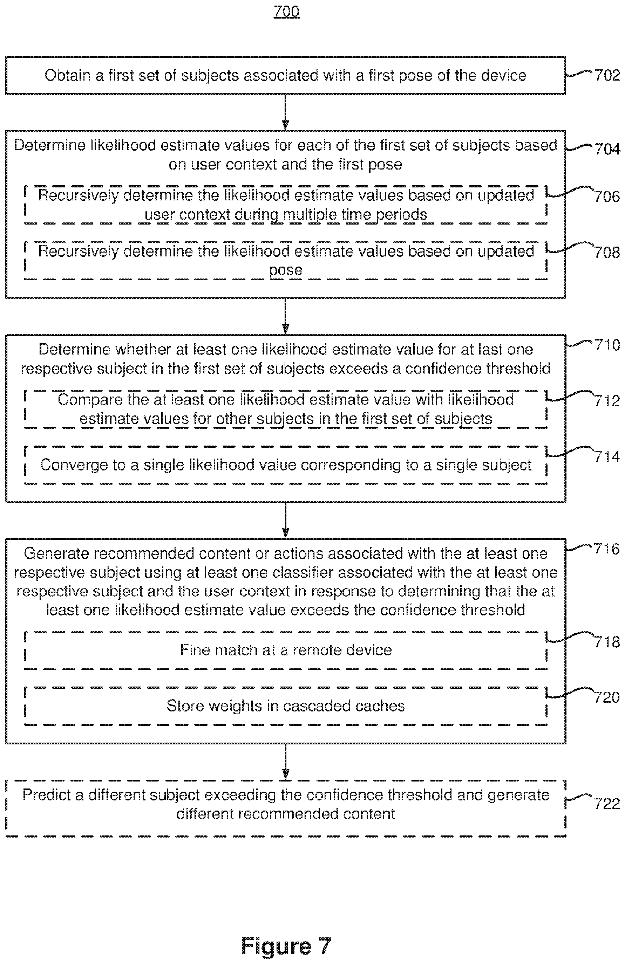

Figure 7 is a flowchart representation of a method 700 of generating recommended CGR content in accordance with some embodiments. In some embodiments (and as detailed below as an example), the method 700 is performed by an electronic device (or a portion thereof), such as the electronic device 104 in Figure 1 or the device 300 in Figure 3, that includes one or more processors and a non-transitory memory. In some embodiments, the device also includes an image sensor or camera assembly, a display, and one or more inputs devices. For example, the display and the one or more input devices are combined into a touch screen display. In this example, the electronic device corresponds to a smartphone or a tablet. In another example, the display and the one or more input devices are separate. In this example, the electronic device corresponds to a laptop or desktop computer. For example, the electronic device corresponds to a wearable computing device (including an HMD that encloses or does not enclose the user's eye(s) or a CGR presentation device with one or more CGR displays), smartphone, tablet, laptop computer, desktop computer, kiosk, set-top box (STB), over-the-top (OTT) box, gaming console, and/or the like. In some embodiments, the image sensor is detached from the device, e.g., on a camera remote from the device 104.

In some embodiments, the method 700 is performed by processing logic, including hardware, firmware, software, or a suitable combination thereof. In some embodiments, the method 700 is performed by one or more processors executing code, programs, or instructions stored in a non-transitory computer-readable storage medium (e.g., a non-transitory memory). Some operations in method 700 are, optionally, combined and/or the order of some operations is, optionally, changed. Briefly, the method 700 includes: obtaining a first set of subjects associated with a first pose of the device; determining likelihood estimate values for each of the first set of subjects based on user context and the first pose; determining whether at least one likelihood estimate value for at last one respective subject in the first set of subjects exceeds a confidence threshold; and generating recommended content or actions associated with the at least one respective subject using at least one classifier associated with the at least one respective subject and the user context in response to determining that the at least one likelihood estimate value exceeds the confidence threshold.

The method 700 begins, at block 702, with the electronic device obtaining a first set of subjects associated with a first pose of the device. According to some embodiments, the device 104 or a component thereof (e.g., the image capture control module 850 in Figure 8 or the scanner 510 in Figure 5) obtains scene data (e.g., image data or pass-through image data) by capturing image(s) of the scene from a first reference/vantage point (e.g., a camera position, a pose, or a field of view) with an image sensor or camera assembly. The device 104 or a component thereof (e.g., the image processing module 852 in Figure 8) derives the image data characterizing the field of view and recognized a set of subjects in the field of view. In some embodiments, the first set of subjects is recognized (e.g., by the device 104 or a component thereof such as the subject recognition module 854 in Figure 8) by detecting a gaze proximate to a first region in a field of view of the device, obtaining image data corresponding to the first region, and classifying the first set of subjects based on the image data and one or more classifiers as explained above with reference to Figure 6.

The method 700 continues, at block 704, with the electronic device determining likelihood estimate values for each of the first set of subjects based on user context and the first pose. For example, as shown in Figures 5 and 4A, the device 104 of a component thereof (e.g., the CGR content recommendation module 856 in Figure 8 or the likelihood estimator 530 in Figure 5) obtains the set of subjects proximate to the gaze region 222, including the frame itself 310, the flower 320, and the vase 330. As shown in Figure 3, the device determines the likelihood estimate values for the frame 310, the flower 320, and the vase 330. In some embodiments, the likelihood estimate values correspond to a magnitude/weight of how likely each of the plurality of subjects the user is interested in the plurality of subjects.

In some embodiments, the likelihood estimate values are recursively determined. As represented by block 706, in some embodiments, the likelihood estimate values are recursively determined based on updated user context during multiple time periods. For example, in Figure 3, the likelihood estimate values during the first iteration are assigned during a first time period, and values of the user context can be updated during a second time period between the first iteration and the second iteration. As a result, the likelihood estimate values for the frame 310, the flower 320, and the vase 330 are updated based on the updated values of the user context, e.g., the user no longer has interest in the flower 320. As represented by block 708, in some embodiments, the likelihood estimate values are recursively determined based on updated poses. In some embodiments, the device 104 or a component thereof (e.g., the image capture control module 850 in Figure 8 and/or the image processing module 852 in Figure 8 or the scanner 510 in Figure 5) obtains a second set of subjects associated with a second pose of the device, where at least one subject is in the first set and the second set of subjects, and determines at least one likelihood estimate value for the at least one subject based on the second pose, the user context, and the first pose.

For example, in Figures 2A-2B, the device 104 obtains pass-through image data from a first reference point prior to entering the room. The scene as shown in Figures 2A-2B includes subjects such as the door sign 210 on the room door, a table 230, and a picture frame 220 inside the room. In Figure 2C, the reference point has changed, as the user enters the room, where inside the room, the media capture/interaction interface 202 depicts a scene including subjects such as a clock 240 on the right wall, a dog 236 close to the left wall, and a cupcake 232 and a book 234 on the table 230. As a result, due to the reference point change, the likelihood of the user seeing more information about the room or the building associated with the door sign changes. As another example, in Figure 4A, the device 104 obtains a scene with the picture frame 220 being the center of the field of the view. In Figure 4B, the pose changes cause the field of view to shift from viewing the picture frame 220 in the center to viewing more of the clock 240 hanging on the right wall. As a result, the likelihood estimate values for the picture frame 220 and the clock 240 change.

In some embodiments, the likelihood estimate values are assigned an initial likelihood estimate value (e.g., all likelihood estimate values are 0) or the likelihood estimate values are evenly distributed (e.g., the frame 310, the flower 320, and the vase 330 are assigned equal values initially as shown in Figure 3). In some embodiments, the initial likelihood estimate value is determined by the user context. In one example, an electrical engineer indicates his interest in using an "electrical engineer book," where the electrical engineer book contains a cluster of classifiers including topics specific to electrical engineering (e.g. signal processing, soldering, control systems, etc.). The electrical engineer book can also contain respective initial likelihood estimate values for each of the topics. For example, signal processing would have a higher likelihood estimate value than mechanics. In some embodiments, the initial likelihood estimate value is determined by the first pose information (e.g., what is currently in the field of view of the image sensor), the percentage of visual space is occupied by the subjects in the field of view (e.g., a whiteboard occupies more space than a dry-erase marker), the distance of the subject to the image sensor, and/or the current gaze, etc. For example, in Figure 2C, as the user enters the room, the cupcake 232 may have a higher initial likelihood estimate value compared to the picture frame 220 due to its close distance to the door. Alternately, for example, in Figure 2C, the picture frame 220 may have a higher initial likelihood estimate value compared to the cupcake 232 due to the higher percentage of visual space being occupied.

The method 700 continues, at block 710, with the electronic device determining whether at least one likelihood estimate value for at last one respective subject in the first set of subjects exceeds a confidence threshold. For example, given subjects A, B, and C, where the likelihood estimate values are A = 0.4, B = 0.3, C = 0.3, the device 104 of a component thereof (e.g., the CGR content recommendation module 856 in Figure 8 or the likelihood estimator 530 in Figure 5) determines that subject A exceeds a confidence threshold of 0.3. In some embodiments, as represented by block 712, the determination includes a comparison to other likelihood estimate values. For example, given subjects, A, B, and C, where likelihood estimate values are A = 0.6, B = 0.2, C = 0.2, the likelihood estimate value for subject A > (B+C), therefore subject A exceeds a confidence threshold.

In some embodiments, none of the likelihood estimate values exceed the threshold or multiple likelihood estimate values tie for exceeding the threshold. In such embodiments, more than one iteration is needed to recursively determine updated likelihood estimate values, as described above with reference to steps 706 and 708. In other words, determining whether at least one of the likelihood estimate values exceed a threshold indicates a convergence to a single likelihood estimate value corresponding to a single subject, as represented by block 714. For example, the device 104 or a component thereof (e.g., the CGR content recommendation module 856 in Figure 8 or the likelihood estimator 530 in Figure 5) determines that the at least one likelihood estimate value for the at least one respective subject in the first set of subjects includes a first likelihood estimate value for a first subject and a second likelihood estimate value for a second subject. In response to the determination that multiple likelihood estimate values tie for exceeding the threshold, the device 104 updates the likelihood estimate values for each of the first set of subjects based on at least one of updated user context and update first pose information, including generating an updated first likelihood estimate value for the first subject and an updated second likelihood estimate value for the second subject. The device 104 further selects between the first and the second subject based on the updated first likelihood estimate value and the updated second likelihood estimate value. As shown in Figure 3, the frame 310 and the vase 330 tie during the second and third iteration. Using updated likelihood estimate values during the fourth iteration, the likelihood estimate values converge to a single likelihood estimate value corresponding to the frame 310.

The method 700 continues, at block 716, with the electronic device generating recommended content or actions associated with the at least one respective subject using at least one classifier associated with the at least one respective subject and the user context in response to determining that the at least one likelihood estimate value exceeds the confidence threshold. In some embodiments, the device 104 or a component thereof (e.g., the CGR content rendering module 858 in Figure 8 or the likelihood estimator 530 distributes computational intensive tasks, such as fine matching to a second computing device as represented by block 718. In such embodiments, as explained above with reference to Figure 5, the device 104 generates compressed vectors (e.g., at the encoder 532 in Figure 5) representing the first set of subjects associated with the user context and the first pose. The device 104 then sends the compressed vectors to a second device remotely in order to generate recommended weights for classifiers associated with the first set of subjects. After performing fine grained matching at the second device, e.g., by machine learning across users, the device 104 receives the recommended weights from the second device for generating the recommended content or actions. In some embodiments, to further facilitate the recommendation generation, as represented by block 720, the device 104 stores the first set of subjects and associated weights in a plurality of cascaded caches (e.g., the cascaded caches 550-1, 550-2, 550-3...550-N in Figure 5). In such embodiments, the subjects are stored in the cascaded caches in the order of weights.

In some embodiments, the method 700 continues, at block 722, with the electronic device predicting a different subject based on at least one of updated user context and updated first pose information that exceeds the confidence threshold and generating a set of recommended content or actions associated with the different subject. For example, if the first pose and the second pose indicate the focal point is moving to the right within the field of view, based on the user context, the likelihood estimator predicts the next subject on the right side of the field of view to provide recommended content. For example, as shown in Figure 4A, initially, the focal point associated with the first pose was on the frame in the center of the field of view. Continuing this example, as shown in Figure 4B, as the focal point associated with the second pose moves to the right, based on the user context of a meeting in the calendar, it is more likely that the user intents to look at the clock on the right wall even though the gaze region 222 is still within a threshold distance from the clock 240. In contrast, since the changes from the first pose to the second pose indicate the gaze region is shifting to the right, it is unlikely that the user intents to obtain information about the dog 236 on the left side. Based on the updated pose information, the device 104 predicts that the user is most likely interested in the event calendar 242 associated with the clock 240. However, as shown in Figure 4C, based on updated user context information, e.g., an upcoming veterinarian visit is for the dog 236, the device 104 predicts that providing more information about the dog 236 and the appointment information at the veterinarian (e.g., the recommended content 244) is generated.

Figure 8 is a block diagram of a computing device 800 in accordance with some embodiments. In some embodiments, the computing device 800 corresponds to at least a portion of the device 104 in Figure 1 and performs one or more of the functionalities described above. While certain specific features are illustrated, those skilled in the art will appreciate from the present disclosure that various other features have not been illustrated for the sake of brevity, and so as not to obscure more pertinent aspects of the embodiments disclosed herein. To that end, as a non-limiting example, in some embodiments the computing device 800 includes one or more processing units (CPUs) 802 (e.g., processors), one or more input/output (I/O) interfaces 803 (e.g., network interfaces, input devices, output devices, and/or sensor interfaces), a memory 810, a programming interface 805, and one or more communication buses 804 for interconnecting these and various other components.

In some embodiments, the one or more communication buses 804 include circuitry that interconnects and controls communications between system components. The memory 810 includes high-speed random-access memory, such as DRAM, SRAM, DDR RAM or other random-access solid-state memory devices; and, in some embodiments, include non-volatile memory, such as one or more magnetic disk storage devices, optical disk storage devices, flash memory devices, or other non-volatile solid-state storage devices. The memory 810 optionally includes one or more storage devices remotely located from the one or more CPUs 802. The memory 810 comprises a non-transitory computer readable storage medium. Moreover, in some embodiments, the memory 810 or the non-transitory computer readable storage medium of the memory 810 stores the following programs, modules and data structures, or a subset thereof including an optional operating system 820, an image capture control module 850, an image processing module 852, a subject recognition module 854, a CGR content recommendation module 856, and a CGR content rendering module 858. In some embodiments, one or more instructions are included in a combination of logic and non-transitory memory. The operating system 820 includes procedures for handling various basic system services and for performing hardware dependent tasks.

In some embodiments, the image capture control module 850 is configured to control the functionality of an image sensor or camera assembly to capture images or obtain image data. To that end, the image capture control module 850 includes a set of instructions 851a and heuristics and metadata 851b.

In some embodiments, the image processing module 852 is configured to preprocess raw image data from the image sensor or camera assembly (e.g., convert RAW image data to RGB or YCbCr image data and derive pose information etc.). To that end, the image processing module 852 includes a set of instructions 853a and heuristics and metadata 853b.

In some embodiments, the subject recognition module 854 is configured to recognize subject(s) from the image data. To that end, the subject recognition module 854 includes a set of instructions 855a and heuristics and metadata 855b.

In some embodiments, the CGR content recommendation module 856 is configured to recommend CGR content item(s) associated with the recognized subject(s). To that end, the CGR content recommendation module 856 includes a set of instructions 857a and heuristics and metadata 857b.

In some embodiments, the CGR content rendering module 858 is configured to composite and render the CGR content items in the field of view proximate to the recognized subject. To that end, the CGR content rendering module 858 includes a set of instructions 859a and heuristics and metadata 859b.

Although the image capture control module 850, the image processing module 852, the subject recognition module 854, the CGR content recommendation module 856, and the CGR content rendering module 858 are illustrated as residing on a single computing device, it should be understood that in other embodiments, any combination of the image capture control module 850, the image processing module 852, the subject recognition module 854, the CGR content recommendation module 856, and the CGR content rendering module 858 can reside in separate computing devices in various embodiments. For example, in some embodiments each of the image capture control module 850, the image processing module 852, the subject recognition module 854, the CGR content recommendation module 856, and the CGR content rendering module 858 can reside on a separate computing device or in the cloud.

Moreover, Figure 8 is intended more as a functional description of the various features which are present in a particular implementation as opposed to a structural schematic of the embodiments described herein. As recognized by those of ordinary skill in the art, items shown separately could be combined and some items could be separated. For example, some functional modules shown separately in Figure 8 could be implemented in a single module and the various functions of single functional blocks could be implemented by one or more functional blocks in various embodiments. The actual number of modules and the division of particular functions and how features are allocated among them will vary from one embodiment to another, and may depend in part on the particular combination of hardware, software and/or firmware chosen for a particular embodiment.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at a device including one or more processors and a non-transitory memory:
obtaining (602) image data characterizing a field of view captured by an image sensor;
determining (604) whether a recognized subject in the image data satisfies a confidence score threshold associated with a user-specific recommendation profile indicating a user's interest in the recognized subject;
generating (622) one or more computer-generated reality, CGR, content items associated with the recognized subject in response to determining that the recognized subject in the image data satisfies the confidence score threshold; and
compositing (624) the image data with the one or more CGR content items, wherein the one or more CGR content items are displayed proximate to the recognized subject in the field of view; wherein
the recognized subject in the image data is recognized by:
determining (606) a region in the field of view where the user is gazing at;
obtaining (608) a subset of the image data corresponding to the region; and
recognizing (610) the recognized subject based on the subset of the image data and a classifier; and **characterized in that**
the method further comprises:
assigning (612) weights to classifiers based on the gaze, wherein each of the classifiers is associated with a respective subject in the region;
adjusting (612) the weights to the classifiers based on updates of the gaze; and
selecting (614) the classifier from the classifiers with a highest weight as the classifier to be used for recognizing the recognized subject.

2. The method of claim 1, wherein the region includes at least part of the recognized subject.

3. The method of claims 1 or 2, further comprising detecting the gaze proximate to the region in the field of view, wherein the recognized subject is within a threshold distance from the region and identified based on the user-specific recommendation profile, including:
obtaining a subset of the image data corresponding to an expanded region; and
identifying the recognized subject based on the subset of the image data and the classifier.

4. The method of any of claims 1-3, further comprising rendering the image data in the field of view with the one or more CGR content items displayed proximate to the recognized subject.

5. The method of any of claims 1-4, wherein the one or more CGR content items include at least one of information associated with the recognized subject or an option to perform an action associated with the recognized subject.

6. The method of any of claims 1-5, wherein the recognized subject includes multiple searchable elements, and each is associated with at least one classifier.

7. The method of any of claims 1-6, wherein the user-specific recommendation profile includes at least one of a context of a user interacting with the device, biometrics of the user, previous searches by the user, or a profile of the user.

8. A device comprising:
a non-transitory memory;
an image sensor;
a scanner configured to provide a gaze of a user; and
one or more processors configured to:
obtain (602) image data characterizing a field of view captured by the image sensor;
determine (604) whether a recognized subject in the image data satisfies a confidence score threshold associated with a user-specific recommendation profile, indicating a
user's interest in the recognized subject;
generate (622) one or more computer-generated reality, CGR, content items associated with the recognized subject in response to determining that the recognized subject in the image data satisfies the confidence score threshold; and
composite (624) the image data with the one or more CGR content items, wherein the one or more CGR content items are displayed proximate to the recognized subject in the field of view,
wherein the recognized subject in the image data is recognized by:
determining (606) a region in the field of view where the user is gazing at;
obtaining (608) a subset of the image data corresponding to the region; and
recognizing (610) the recognized subject based on the subset of the image data and a classifier; and **characterized in that**
the one or more processors are further configured to:
assign (612) weights to classifiers based on the gaze, wherein each of the classifiers is associated with a respective subject in the region;
adjust (612) the weights to the classifiers based on updates of the gaze; and
select (614) the classifier from the classifiers with a highest weight as the classifier to be used for recognizing the recognized subject.

9. The device of claim 8, wherein the region includes at least part of the recognized subject.

10. The device of claims 8 or 9, wherein the one or more processors are further configured to detect the gaze proximate to the region in the field of view, wherein the recognized subject is within a threshold distance from the region and identified based on the user-specific recommendation profile by:
obtaining a subset of the image data corresponding to an expanded region; and
identifying the recognized subject based on the subset of the image data and the classifier.

11. A computer-readable medium having instructions encoded thereon which, when executed by one or more processors of a device, cause the device to perform the method of claim 1.

## Patentansprüche

1. Verfahren, umfassend:
an einer Vorrichtung, die einen oder mehrere Prozessoren und einen nichtflüchtigen Speicher beinhaltet:
Erhalten (602) von Bilddaten, die ein Sichtfeld charakterisieren, das von einem Bildsensor erfasst wird;
Bestimmen (604), ob ein erkanntes Subjekt in den Bilddaten einen Konfidenzbewertungsschwellenwert erfüllt, der mit einem benutzerspezifischen Empfehlungsprofil assoziiert ist, das ein Interesse eines Benutzers an dem erkannten Subjekt angibt;
Erzeugen (622) eines oder mehrerer computergenerierter Realitäts-, CGR-, Inhaltselemente, die mit dem erkannten Subjekt assoziiert sind, als Reaktion auf das Bestimmen, dass das erkannte Subjekt in den Bilddaten den Konfidenzbewertungsschwellenwert erfüllt; und
Zusammensetzen (624) der Bilddaten mit dem einen oder den mehreren CGR-Inhaltselementen,
wobei das eine oder die mehreren CGR-Inhaltselemente in der Nähe des erkannten Subjekts im Sichtfeld angezeigt werden; wobei das erkannte Subjekt in den Bilddaten erkannt wird durch:
Bestimmen (606) eines Bereichs im Sichtfeld, in den der Benutzer blickt;
Erhalten (608) einer Teilmenge der Bilddaten, die dem Bereich entsprechen;
und
Erkennen (610) des erkannten Subjekts basierend auf der Teilmenge der Bilddaten und einem Klassifikator; und **dadurch gekennzeichnet, dass** das Verfahren ferner umfasst:
Zuweisen (612) von Gewichtungen zu Klassifikatoren basierend auf dem Blick, wobei jeder der Klassifikatoren einem jeweiligen Subjekt in dem Bereich zugeordnet ist;
Anpassen (612) der Gewichtungen an die Klassifikatoren basierend auf Aktualisierungen des Blicks; und
Auswählen (614) des Klassifikators aus den Klassifikatoren mit einer höchsten Gewichtung als den Klassifikator, der zum Erkennen des erkannten Subjekts verwendet werden soll.

2. Verfahren nach Anspruch 1, wobei der Bereich mindestens einen Teil des erkannten Subjekts beinhaltet.

3. Verfahren nach Anspruch 1 oder 2, ferner umfassend Erkennen des Blicks in der Nähe des Bereichs im Sichtfeld, wobei sich das erkannte Subjekt innerhalb eines Schwellenabstands von dem Bereich befindet und basierend auf dem benutzerspezifischen Empfehlungsprofil identifiziert wird, beinhaltend:
Erhalten einer Teilmenge der Bilddaten, die einem erweiterten Bereich entsprechen;
und
Identifizieren des erkannten Subjekts basierend auf der Teilmenge der Bilddaten und dem Klassifikator.

4. Verfahren nach einem der Ansprüche 1-3, ferner umfassend das Rendern der Bilddaten im Sichtfeld mit dem einen oder den mehreren CGR-Inhaltselementen, die in der Nähe des erkannten Subjekts angezeigt werden.

5. Verfahren nach einem der Ansprüche 1-4, wobei das eine oder die mehreren CGR-Inhaltselemente mindestens eines von Information, die mit dem erkannten Subjekt assoziiert ist, oder einer Option zum Durchführen einer Aktion, die mit dem erkannten Subjekt assoziiert ist, beinhalten.

6. Verfahren nach einem der Ansprüche 1-5, wobei das erkannte Subjekt mehrere durchsuchbare Elemente beinhaltet und jedes mit mindestens einem Klassifikator assoziiert ist.

7. Verfahren nach einem der Ansprüche 1-6, wobei das benutzerspezifische Empfehlungsprofil mindestens eines von einem Kontext eines Benutzers, der mit der Vorrichtung interagiert, Biometrie des Benutzers, vorherigen Suchen durch den Benutzer oder einem Profil des Benutzers beinhaltet.

8. Vorrichtung, umfassend:
einen nichtflüchtigen Speicher;
einen Bildsensor;
einen Scanner, der konfiguriert ist, um einen Blick eines Benutzers bereitzustellen; und
einen oder mehrere Prozessoren, die konfiguriert sind zum:
Erhalten (602) von Bilddaten, die ein Sichtfeld charakterisieren, das von dem Bildsensor erfasst wird;
Bestimmen (604), ob ein erkanntes Subjekt in den Bilddaten einen Konfidenzbewertungsschwellenwert erfüllt, der mit einem benutzerspezifischen Empfehlungsprofil assoziiert ist, das ein Interesse eines Benutzers an dem erkannten Subjekt angibt;
Erzeugen (622) eines oder mehrerer computergenerierter Realitäts-, CGR-, Inhaltselemente, die mit dem erkannten Subjekt assoziiert sind, als Reaktion auf das Bestimmen, dass das erkannte Subjekt in den Bilddaten den
Konfidenzbewertungsschwellenwert erfüllt; und
Zusammensetzen (624) der Bilddaten mit dem einen oder den mehreren CGR-Inhaltselementen, wobei das eine oder die mehreren CGR-Inhaltselemente in der Nähe des erkannten Subjekts im Sichtfeld angezeigt werden,
wobei das erkannte Subjekt in den Bilddaten erkannt wird durch:
Bestimmen (606) eines Bereichs im Sichtfeld, in den der Benutzer blickt;
Erhalten (608) einer Teilmenge der Bilddaten, die dem Bereich entsprechen; und
Erkennen (610) des erkannten Subjekts basierend auf der Teilmenge der Bilddaten und
einem Klassifikator; und **dadurch gekennzeichnet, dass** der eine oder die mehreren Prozessoren ferner konfiguriert sind zum:
Zuweisen (612) von Gewichtungen zu Klassifikatoren basierend auf dem Blick, wobei jeder der Klassifikatoren einem jeweiligen Subjekt in dem Bereich zugeordnet ist;
Anpassen (612) der Gewichtungen an die Klassifikatoren basierend auf Aktualisierungen des Blicks; und
Auswählen (614) des Klassifikators aus den Klassifikatoren mit einer höchsten Gewichtung als den Klassifikator, der zum Erkennen des erkannten Subjekts verwendet werden soll.

9. Vorrichtung nach Anspruch 8, wobei der Bereich mindestens einen Teil des erkannten Subjekts beinhaltet.

10. Vorrichtung nach Anspruch 8 oder 9, wobei der eine oder die mehreren Prozessoren ferner konfiguriert sind, um den Blick in der Nähe des Bereichs im Sichtfeld zu erkennen, wobei sich das erkannte Subjekt innerhalb eines Schwellenabstands von dem Bereich befindet und basierend auf dem benutzerspezifischen Empfehlungsprofil identifiziert wird durch:
Erhalten einer Teilmenge der Bilddaten, die einem erweiterten Bereich entsprechen;
und Identifizieren des erkannten Subjekts basierend auf der Teilmenge der Bilddaten und dem Klassifikator.

11. Computerlesbares Medium mit darauf codierten Anweisungen, die, wenn sie von einem oder mehreren Prozessoren einer Vorrichtung ausgeführt werden, die Vorrichtung veranlassen, das Verfahren nach Anspruch 1 durchzuführen.

## Revendications

1. Un procédé comprenant :
sur un dispositif comprenant un ou plusieurs processeurs et une mémoire non transitoire :
l'obtention (602) de données d'image caractérisant un champ de vision capturé par un capteur d'images ;
la détermination (604) si un sujet reconnu dans les données d'image vérifie ou non un seuil de score de confiance associé à un profil de recommandation spécifique à un utilisateur, indiquant un intérêt d'un utilisateur pour le sujet reconnu ;
la génération (622) d'un ou plusieurs éléments de contenu en réalité générée par ordinateur, CGR, associés au sujet reconnu, en réponse à la détermination que le sujet reconnu dans les données d'image vérifie le seuil de score de confiance ; et
la composition (624) des données d'image avec les un ou plusieurs éléments de contenu CGR, les un ou plusieurs éléments de contenu CGR étant affichés à proximité du sujet reconnu dans le champ de vision ;
dans lequel le sujet reconnu dans les données d'image est reconnu par :
détermination (606) d'une région dans le champ de vision où l'utilisateur tourne le regard ;
obtention (608) d'un sous-ensemble des données d'image correspondant à la région ; et
reconnaissance (610) du sujet reconnu, sur la base du sous-ensemble de données d'image et d'un
classificateur ; et **caractérisé en ce que**
le procédé comprend en outre :
l'attribution (612) de poids à des classifieurs basés sur le regard, chacun des classifieurs étant associé à un sujet respectif dans la région ;
l'ajustement (612) des poids donnés aux classifieurs, sur la base de mises à jour du regard ; et
la sélection (614), en tant que classifieur à utiliser pour reconnaître le sujet reconnu, de celui des classifieurs qui a le poids le plus élevé.

2. Le procédé de la revendication 1, dans lequel la région comprend au moins une partie du sujet reconnu.

3. Le procédé des revendications 1 ou 2, comprenant en outre la détection du regard à proximité de la région dans le champ de vision, le sujet reconnu se trouvant dans les limites d'un seuil de distance de la région et étant identifié sur la base du profil de recommandation spécifique à l'utilisateur, comprenant :
l'obtention d'un sous-ensemble des données d'image correspondant à une région agrandie ; et
l'identification du sujet reconnu sur la base du sous-ensemble des données d'image et du classifieur.

4. Le procédé de l'une des revendications 1 à 3, comprenant en outre la restitution des données d'image dans le champ de vision avec les un ou plusieurs éléments de contenu CGR affichés à proximité du sujet reconnu.

5. Le procédé de l'une des revendications 1 à 4, dans lequel les un ou plusieurs éléments de contenu CGR comprennent au moins l'une d'entre une information associée au sujet reconnu ou une option d'exécution d'une action associée au sujet reconnu.

6. Le procédé de l'une des revendications 1 à 5, dans lequel le sujet reconnu comprend des éléments recherchables multiples, chacun étant associé à au moins un classifieur.

7. Le procédé de l'une des revendications 1 à 6, dans lequel le profil de recommandation spécifique à l'utilisateur comprend au moins l'un d'entre un contexte d'un utilisateur interagissant avec le dispositif, une biométrique de l'utilisateur, des recherches antérieures par l'utilisateur, ou un profil de l'utilisateur.

8. Un dispositif comprenant :
une mémoire non transitoire ;
un capteur d'images ;
un scanner configuré pour donner un regard d'un utilisateur ; et
un ou plusieurs processeurs configurés pour :
obtenir (602) des données d'image caractérisant un champ de vision capturé par le capteur d'images ;
déterminer (604) si un sujet reconnu dans les données d'image vérifie ou non un seuil de score de confiance associé à un profil de recommandation spécifique à un utilisateur, indiquant un intérêt d'un utilisateur pour le sujet reconnu ;
générer (622) un ou plusieurs éléments de contenu en réalité générée par ordinateur, CGR, associés au sujet reconnu, en réponse à la détermination que le sujet reconnu dans les données d'image vérifie le seuil de score de confiance ; et
composer (624) les données d'image avec les un ou plusieurs éléments de contenu CGR, les un ou plusieurs éléments de contenu CGR étant affichés à proximité du sujet reconnu dans le champ de vision ;
dans lequel le sujet reconnu dans les données d'image est reconnu par :
détermination (606) d'une région dans le champ de vision où l'utilisateur tourne le regard ;
obtention (608) d'un sous-ensemble des données d'image correspondant à la région ; et
reconnaissance (610) du sujet reconnu, sur la base du sous-ensemble de données d'image et d'un
classificateur ; et **caractérisé en ce que** les un ou plusieurs processeurs sont en outre configurés pour :
attribuer (612) des poids à des classifieurs basés sur le regard, chacun des classifieurs étant associé à un sujet respectif dans la région ;
ajuster (612) les poids donnés aux classifieurs, sur la base de mises à jour du regard ; et
sélectionner (614), en tant que classifieur à utiliser pour reconnaître le sujet reconnu, celui des classifieurs qui a le poids le plus élevé.

9. Le dispositif de la revendication 8, dans lequel la région comprend au moins une partie du sujet reconnu.

10. Le dispositif de la revendication 8 ou 9, dans lequel les un ou plusieurs processeurs sont en outre configurés pour détecter le regard à proximité de la région dans le champ de vision, le sujet reconnu se trouvant dans les limites d'un seuil de distance de la région et étant identifié sur la base du profil de recommandation spécifique à l'utilisateur, par :
obtention d'un sous-ensemble des données d'image correspondant à une région agrandie ; et
identification du sujet reconnu sur la base du sous-ensemble des données d'image et du classifieur.

11. Un support lisible par calculateur avec des instructions codées dessus qui, lorsqu'elles sont exécutées par un ou plusieurs processeurs d'un dispositif, font en sorte que le dispositif mette en œuvre le procédé de la revendication 1.
